# EUROPEAN PATENT APPLICATION

(11) **EP 2 902 910 A1**
(43) Date of publication of application: **05.08.2015**
(21) Application number: 15152925.2
(22) Date of filing: 28.01.2015
(51) Int. Cl.: G06F 12/08

(54) **Electronic device, and method for accessing data in electronic device**

(30) Priority: 29.01.2014 KR 20140011194
(71) Applicant: Samsung Electronics Co., Ltd, Gyeonggi-do 443-742 (KR)
(72) Inventor: Yang, Seung-Jin, Gyeonggi-do 443-742 (KR); Kim, Gil-Yoon, Gyeonggi-do 443-742 (KR); Park, Jin-Young, Gyeonggi-do 443-742 (KR); Jang, Jin-Yong, Gyeonggi-do 443-742 (KR); Chung, Chun-Mok, Gyeonggi-do 443-742 (KR); Choi, Jin, Gyeonggi-do 443-742 (KR); Hong, Eun-Seok, Gyeonggi-do 443-742 (KR)
(74) Representative: Gover, Richard Paul

(57) **Abstract**

A method for accessing data in an electronic device is provided. The method includes receiving a request for the data from at least one processor by a first cache memory among a plurality of cache memories, transmitting the requested data to the at least one processor, and transmitting access-related information regarding the request to a second cache memory among the plurality of cache memories.

## Description

### TECHNICAL FIELD

The present invention relates to an electronic device for accessing data using a cache memory and a method for accessing data in an electronic device.

### BACKGROUND

Along with the increasing use of electronic devices, various types of processors (e.g., a Central Processing Unit (CPU), a Graphic Processing Unit (GPU), a Digital Signal Processor (DSP), and the like) have been developed. Each processor of an electronic device may access various types of memory to read desired data from the memory, and/or to write data to be stored in the memory, thereby performing a desired task.

As the amount of data being processed increases due to the development of technology, there is an increasing importance of the processing speed of a processor and the access speed to a memory by the processor. Accordingly, to improve the access speed to the memory by the processor, a way to dispose a cache between the processor and the memory has been proposed.

The cache is a storage device in the form of a buffer, which is filled with the commands or programs read from a memory (e.g., a main memory), and is a buffer memory that is installed between a memory and a processor (e.g., a CPU). The cache is also referred to as a cache memory or a local memory.

The cache memory may be accessed at a higher speed, compared with the memory (e.g., the main memory), and the processor may access the cache memory ahead of the memory. Therefore, an electronic device may store data or program commands in the cache memory, to prevent the operation of repeatedly searching for the frequently accessed data or programs.

According to the existing technology, a memory interleaving system may divide a cache memory into cache memories, the number of which corresponds to the number of, for example, memory modules, for the maintenance of the bandwidth, and install a cache memory in front of each memory module to reduce the latency of the memory access time while maintaining the bandwidth. To this end, a memory address may be divided for each memory module, and addresses for different memory modules may undesirably have the spatial locality. In addition, in the conventional memory access method, if an access time difference occurs between cache memories, the data processing performance may be affected.

The above information is presented as background information only to assist with an understanding of the present invention. No determination has been made, and no assertion is made, as to whether any of the above might be applicable as prior art with regard to the present invention.

### SUMMARY

An aim of certain embodiments of the present invention is to provide an electronic device in which separated cache memories may share information related to data access, a method for accessing data in the electronic device, and a computer-readable recording medium.

In accordance with a first aspect of the present invention, a method for accessing data in an electronic device is provided. The method includes receiving a request for the data from at least one processor by a first cache memory among a plurality of cache memories, transmitting the requested data to the at least one processor, and transmitting access-related information regarding the request to a second cache memory among the plurality of cache memories.

The term "plurality" as used herein should be interpreted as meaning two or more.

In accordance with an embodiment of the present invention, a method for accessing data in an electronic device is provided. The method includes receiving a request for the data from at least one processor by a first cache memory among a plurality of cache memories, determining whether the data requested by the at least one processor is present in the first cache memory, and transmitting access-related information regarding the request to a second cache memory among the plurality of cache memories, if the requested data is present in the first cache memory.

In accordance with a embodiment of the present invention, a method for accessing data in an electronic device is provided. The method includes receiving a request for the data from at least one processor by a first cache memory among a plurality of cache memories, determining whether the data requested by the at least one processor is present in the first cache memory, and transmitting access-related information regarding the request to a second cache memory among the plurality of cache memories, if the requested data is not present in the first cache memory.

In accordance with a second aspect of the present invention, an electronic device for accessing data is provided. The electronic device includes at least one processor, a plurality of cache memories configured to transmit the data requested by the at least one processor to the at least one processor, and a plurality of memories, each of which is connected to an associated one of the cache memories and configured to transmit the requested data through the associated one of the cache memories. At least one of the plurality of cache memories may share access-related information regarding data requested by a processor with other cache memories.

In accordance with another embodiment of the present invention, an electronic device for accessing data is provided. The electronic device includes a processor, a first cache memory configured to transmit first data requested by the processor to the processor, and a second cache memory configured to transmit second data requested by the processor to the processor. The first cache memory and the second cache memory may be functionally connected by a bus line to share data with each other.

Another aspect of the invention provides a computer program comprising instructions arranged, when executed, to implement a method in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses various embodiments of the present invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 schematically illustrates an electronic device for data access according to an embodiment of the present invention;
FIG. 2 illustrates address assignment to a plurality of memories or cache memories in an electronic device according to an embodiment of the present invention;
FIG. 3 schematically illustrates an electronic device including cache memories capable of data sharing according to an embodiment of the present invention;
FIG. 4 is a flowchart illustrating a data access procedure in an electronic device according to an embodiment of the present invention;
FIG. 5 is a flowchart illustrating a data access procedure during occurrence of a cache miss according to an embodiment of the present invention;
FIG. 6 is a flowchart illustrating a data access procedure during occurrence of a cache hit according to an embodiment of the present invention;
FIGS. 7, 8, 9, and 10 illustrate examples in which data access is handled in each component of an electronic device according to an embodiment of the present invention;
FIG. 11 is a block diagram illustrating an electronic device according to an embodiment of the present invention;
FIG. 12 is a block diagram illustrating an electronic device according to an embodiment of the present invention; and
FIG. 13 is a block diagram illustrating an electronic device according to an embodiment of the present invention.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present invention as defined by the claims. It includes various specific details to assist in that understanding but these are to be regarded as merely exemplary. Accordingly, those of ordinary skilled in the art will recognize that various changes and modifications of the various embodiments described herein may be made without departing from the scope of the present invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the present invention. Accordingly, it should be apparent to those skilled in the art that the following description of various embodiments of the present invention is provided for illustration purpose only and not for the purpose of limiting the present invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

An electronic device for data access according to various embodiments of the present invention may be an electronic device such as, for example, a smart phone, a tablet Personal Computer (PC), a PC, a laptop computer, a Moving Picture Experts Group (MPEG-1 or MPEG-2) Audio Layer III (MP3) player, a camera, a wearable device and the like. In accordance with an embodiment of the present invention, the electronic device may be a device equipped with a communication function. Further, in accordance with an embodiment of the present invention, the electronic device may be a smart home appliance equipped with a communication function. In addition, in accordance with an embodiment of the present invention, the electronic device may include various medical devices, navigation devices, Global Positioning System (GPS) receivers, cars and the like.

Embodiments of the present invention provide a method for accessing data using, for example, memory interleaving. In addition, embodiments of the present invention provide a method for accessing data using a plurality of cache memories connected to a plurality of memories (e.g., main memories) by, for example, at least one processor.

In accordance with an embodiment of the present invention, cache memories may share, with each other, the information related to data access from a processor, thereby reducing the latency of the memory access time while maintaining the bandwidth.

The term 'processor' as used herein may refer to a functional unit that executes a command in an electronic device. For example, the processor may include a Central Processing Unit (CPU), a Graphic Processing Unit (GPU), a Memory Flow Controller (MFC), a Digital Signal Processor (DSP), and the like. The processor may be incorporated into a display, an audio module, an embedded Multi Media Card (eMMC) and the like, and embodiments of the present invention will not be limited thereto.

The term 'memory' as used herein may refer to various types of storage media for storing data. The processor may access the memory to read the data stored in the memory, or to write the data to be stored in the memory. In some embodiments described below, the memory may mean a main memory (hereinafter referred to as a memory) which is distinguishable from a cache memory, and the memory according to an embodiment of the present invention will not be limited thereto. In addition, the 'cache memory' may refer to a storage device in the form of a buffer, which is connected to the memory and filled with commands or programs read from the memory. For example, the cache memory may mean a buffer memory that is installed between the memory and the processor (e.g., CPU).

The term 'access' as used herein may be construed to include a process of writing data in the memory or searching for and reading data stored in the memory by the processor, and may refer to the overall operation between the processor and the memory.

The term 'access-related information' as used herein may be construed to include various types of information that may be considered in an operation in which the processor accesses the memory. For example, the access-related information may be a data value that the processor requests by accessing the memory, and may be information about a logical or physical address of the memory, in which the requested data is stored. If data is stored in the memory in units of blocks, the access-related information may be information about the block to be accessed.

The access-related information may include information (e.g., cache miss information or cache hit information) indicating whether the requested data is present in the cache memory regarding an operation in which the processor requests data from the cache memory. In addition, the access-related information may include information about the number of occurrences of a cache miss or information about the number of occurrences of a cache hit. As for any types of unmentioned information (e.g., various traffic-related information of a bus line regarding the data access), information related to memory access by the processor may be included in the access-related information according to an embodiment of the present invention.

The term 'cache hit' as used herein may refer to a case in which when the processor requests data from the cache memory, the requested data is stored in the cache memory. The term 'cache miss' as used herein may refer to a case in which when the processor requests data from the cache memory, the requested data is not stored in the cache memory.

Various embodiments of the present invention may provide methods in which at least cache memory transmits various types of access-related information to another cache memory, thereby improving performance of the processor and performance of the data access. For example, in accordance with an embodiment of the present invention, if a cache miss occurs in a specific cache memory, the cache memory may deliver information related to the cache miss to another cache memory so that another cache memory may prepare the data in advance, thereby preventing the same cache miss from occurring in another cache memory. If the occurrence of a cache miss is reduced in this way, the data transmission speed and transmission efficiency may be improved. In accordance with another embodiment of the present invention, if a cache hit occurs in a specific cache memory, the cache memory may deliver information related to the cache hit to another cache memory so that another cache memory may prepare the data to be requested next in advance, thereby implementing the cache memory to function as a pre-fetch buffer.

To allow those of ordinary skill in the field of embodiments of the present invention to easily implement embodiments of the present invention, embodiments of the present invention will be described in detail with reference to the accompanying drawings.

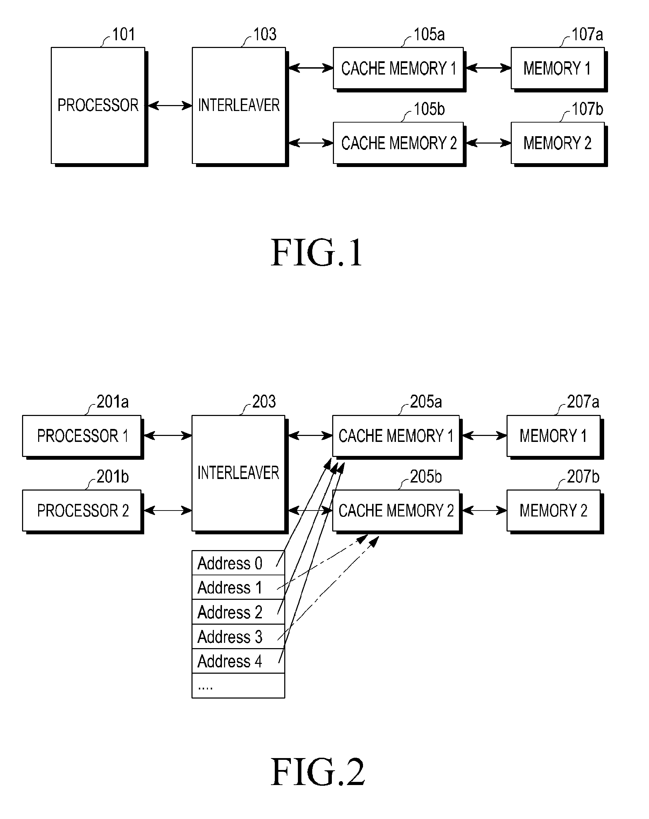

First, reference will be made to FIGS. 1 and 2 to describe the concept of a method for accessing data using memory interleaving in an electronic device to which various embodiments of the present invention are applied.

FIG. 1 schematically illustrates an electronic device for data access according to an embodiment of the present invention.

Referring to FIG. 1, the electronic device for data access may include at least one processor 101, an interleaver 103, a plurality of cache memories 105a and 105b, and a plurality of memories 107a and 107b. The memories 107a and 107b may mean main memories as described above, and in below-described embodiments of the present invention, the memories 107a and 107b may be used as the concept of the memories distinguishable from the cache memories 105a and 105b.

The processor 101 may access the first memory 107a or the second memory 107b to request data, and may read the data from the first memory 107a or the second memory 107b and process the read data. Instead of directly accessing, for example, the first memory 107a or the second memory 107b to request data, the processor 101 may request data from the first cache memory 105a or the second cache memory 105b which is connected to their associated first memory 107a or second memory 107b as shown in the drawing. The cache memories 105a and 105b may determine whether the requested data is stored in the cache memories 105a and 105b, in response to the data request, and if the requested data is stored (as described above, this is called a 'cache hit'), the cache memories 105a and 105b may provide the stored data to the processor 101. If the data requested by the processor 101 is not stored in the cache memories 105a and 105b (as described above, this is called a 'cache miss'), the processor 101 may request the data from the memories 107a and 107b connected to their associated cache memories 105a and 105b. Accordingly, the cache memories 105a and 105b may read the data from their associated memories 107a and 107b, and provide the read data to the processor 101. The read data may be stored in the cache memories 105a and 105b.

If the interleaver 103 is connected to the plurality of memories 107a and 107b via the plurality of cache memories 105a and 105b, or is directly connected to the plurality of memories 107a and 107b, the processor 101 may select any one of the plurality of memories 107a and 107b to request data, and then fetch the data stored in the selected one of the memories 107a and 107b.

Referring to FIG. 1, the processor 101 is not limited to a specific processor in the electronic device, and any component that requests data stored in a memory and processes the data that is read in response to the request may serve as the processor according to an embodiment of the present invention. For example, as described above, the processor 101 may include a CPU, GPU, MFC, DSP and the like. The processor 101 may be incorporated into a display, an audio module, an eMMC or the like, and embodiments of the present invention are not limited thereto.

Referring to FIG. 1, the first memory 107a or the second memory 107b may mean main memories which are distinguishable from the cache memories 105a and 105b, as described above. The cache memories 105a and 105b may mean storage devices in the form of a buffer, which are filled with commands or programs read from the memories 107a and 107b, as described above. For example, the cache memories 105a and 105b may be highspeed buffer memories which are installed between the memories 107a and 107b and the processor 101 (e.g., a CPU). For example, the cache memories 105a and 105b may store the data stored in the memories 107a and 107b, in units of blocks. The miss rate of the cache memories 105a and 105b may be related to the transmission line size of the cache memories 105a and 105b.

Now, reference will be made to FIG. 2 to describe in more detail the function of the interleaver 103 in FIG. 1.

FIG. 2 illustrates address assignment to a plurality of memories or cache memories in an electronic device according to an embodiment of the present invention.

Referring to FIG. 2, when requesting data stored in a plurality of memories 207a and 207b, at least one of processors 201a and 201b may request the data from its associated one of the memories 207a and 207b, in which the requested data is stored, through an interleaver 203. If a plurality of cache memories 205a and 205b are provided for their associated memories 207a and 207b, the at least one of processors 201a and 201b may request the data from an associated one of the cache memories 205a and 205b corresponding to the memories 207a and 207b, through the interleaver 203.

In this way, the interleaving technique using the interleaver 203 may divide a continuous memory space into small-size memory spaces and assign them to different memories so that the bus traffic of processors may be uniformly distributed to a plurality of memories.

Now, a description will be made of methods for accessing data through information sharing between cache memories according to embodiments of the present invention, using the electronic device for data access, to which FIGS. 1 and 2 are applied.

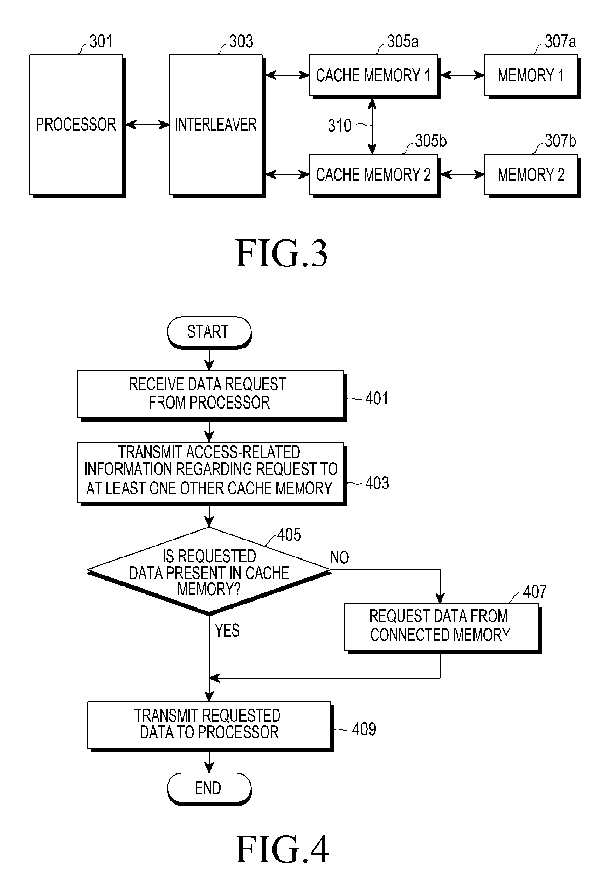

FIG. 3 schematically illustrates an electronic device including cache memories capable of data sharing according to an embodiment of the present invention.

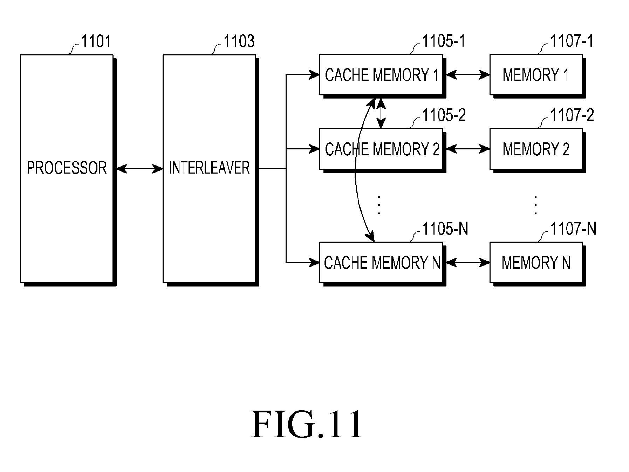

Referring to FIG. 3, the electronic device for data access according to an embodiment of the present invention may include at least one processor 301, an interleaver 303, a plurality of cache memories 305a and 305b, and a plurality of memories 307a and 307b. Although it is shown in FIG. 3 that two memories are connected to two cache memories, respectively, and the two cache memories are connected to an interleaver, three or more memories may be connected to three or more cache memories according to embodiments of the present invention (see FIG. 11). Alternatively, in certain embodiments, the number of memories may be different from the number of cache memories.

The processor 301 may request data from the first cache memory 305a or the second cache memory 305b which is connected to their associated first memory 307a or second memory 307b, through the interleaver 303 as described in FIG. 1. The cache memories 305a and 305b may determine whether data is stored in the cache memories 305a and 305b, in response to the data request, and if the requested data is stored, the cache memories 305a and 305b may provide the stored data to the processor 301. If the requested data is not stored in the cache memories 305a and 305b, in response to the data request from the processor 301, then the processor 301 may request the requested data from the memories 307a and 307b connected to their associated cache memories 305a and 305b.

For convenience of description, as described above, a case where the requested data is stored in the cache memory will be referred to as a 'cache hit', and a case where the requested data is not stored in the cache memory will be referred to as a 'cache miss'.

In accordance with an embodiment of the present invention, at least one cache memory (e.g., the first cache memory 305a) may be connected to at least one other cache memory (e.g., the second cache memory 305b), to transmit or receive information (e.g., access-related information) to/from the at least one other cache memory. By the information transmission/reception between the cache memories, access-related information for the at least one cache memory may be shared with the at least one other cache memory according to an embodiment of the present invention. Although it is shown in FIG. 3 that two cache memories are connected to each other to share information, the number of memories and the number of cache memories are not limited thereto.

The cache memory may be connected to another cache memory by a variety of connection means, and may be connected to at least one other cache memory through, for example, a bus line 310. For example, the cache memory may share access-related information with another cache memory by transmitting and receiving the access-related information to/from another cache memory through the bus line. The cache memory may be considered to be functionally connected to another cache memory. Alternatively, the cache memory may be connected by, for example, a physical connection means, or may be implemented to be logically connected.

Referring to an embodiment of the present invention illustrated in FIG. 3, the first cache memory 305a may share information (as described above, this is referred to as 'access-related information') related to data access, with the second cache memory 305b. For example, the access-related information according to an embodiment of the present invention may include not only a value of the data that a processor requests from a memory by accessing the memory as described above, information about the logical or physical address in a memory, in which the requested data is stored, block information of the data to be accessed, cache miss information, cache hit information, information about the number of occurrences of a cache miss, or information about the number of occurrences of a cache hit, but also any information (e.g., various traffic-related information of a bus line) related to data access.

For example, the first cache memory 305a may deliver address information received from the interleaver 303 to one or more other cache memories (e.g., the second cache memory 305b). Further, in accordance with an embodiment of the present invention, if data related to the received address information is stored in the cache memory (e.g., if a cache hit occurs), the cache memory may deliver at least one of the address information and cache hit information to one or more other cache memories. If the data related to the received address information is not stored in the cache memory (e.g., if a cache miss occurs), the cache memory may deliver at least one of the address information and cache miss information to one or more other cache memories.

Further, in accordance with various embodiments of the present invention, the occurrence of a cache hit or a cache miss in the cache memories 305a and 305b may be used as conditions for determining an operation in which the cache memories 305a and 305b deliver access-related information to another cache memory. For example, if a cache hit occurs in the first cache memory 305a, the first cache memory 305a may deliver address information of the access-requested data to one or more other cache memories. In addition, for example, the first cache memory 305a may deliver information about the cache hit together with the address information. In another embodiment, if a cache miss occurs in the first cache memory 305a, the first cache memory 305a may deliver address information of the access-requested data to one or more other cache memories. For example, the first cache memory 305a may deliver information about the cache miss together with the address information.

In accordance with an embodiment of the present invention, upon receiving address information as an example of access-related information from the first cache memory 305a, the second cache memory 305b may determine that a cache hit has occurred in the first cache memory 305a with respect to the address. In another embodiment, upon receiving address information as an example of access-related information from the first cache memory 305a, the second cache memory 305b may determine that a cache miss has occurred in the first cache memory 305a with respect to the address.

In accordance with further another embodiment of the present invention, sharing of access-related information between the cache memories may be performed depending on the number of occurrences of a cache hit or cache miss in a specific cache memory. For example, if a cache hit occurs in the first cache memory 305a, the first cache memory 305a may count the number of occurrences of a cache hit. If the counted number of occurrences of a cache hit is greater than or equal to a certain number, the first cache memory 305a may deliver access-related information (e.g., address information of the requested data) to one or more other cache memories (e.g., the second cache memory 305b). In this case, the first cache memory 305a may deliver information (e.g., the occurrence/non-occurrence of a cache hit, the number of occurrences of a cache hit, and the like) related to the cache hit together with the address information according to an embodiment of the present invention.

Further, in accordance with another embodiment of the present invention, if a cache miss occurs in the first cache memory 305a, the first cache memory 305a may count the number of occurrences of a cache miss. If the counted number of occurrences of a cache miss is greater than or equal to a certain number, the first cache memory 305a may deliver access-related information (e.g., address information of the requested data) to one or more other cache memories (e.g., the second cache memory 305b). In this case, the first cache memory 305a may deliver information (e.g., the occurrence/non-occurrence of a cache miss, the number of occurrences of a cache miss, and the like) related to the cache miss together with the address information according to an embodiment of the present invention.

In an embodiment of the present invention, by sharing access-related information between cache memories 305, it is possible to predict in advance a cache miss in a cache memory or another cache memory. For example, upon receiving cache miss information, the cache memory 305 may read data from the address from the memory 307 before a data request for the next address is made by the processor 301 or the interleaver 303, and then store the read data in the cache memory 305 in advance. Accordingly, it is possible to set a size (or length) of a cache line of the cache memory 305 to be greater than a given size. Therefore, regardless of, for example, the locality of the memory to be accessed, it is possible to reduce the occurrence of a cache miss and to improve the performance of the cache memory 305 according to embodiments of the present invention.

Further, in accordance with an embodiment of the present invention, by sharing access-related information between the cache memories 305, it is possible to pre-load data in the cache memories 305 at the traffic speed of the processor 301, and to obtain the same speed as the speed at which the processor 301 reads data from the cache memory 305 other than the memory 307.

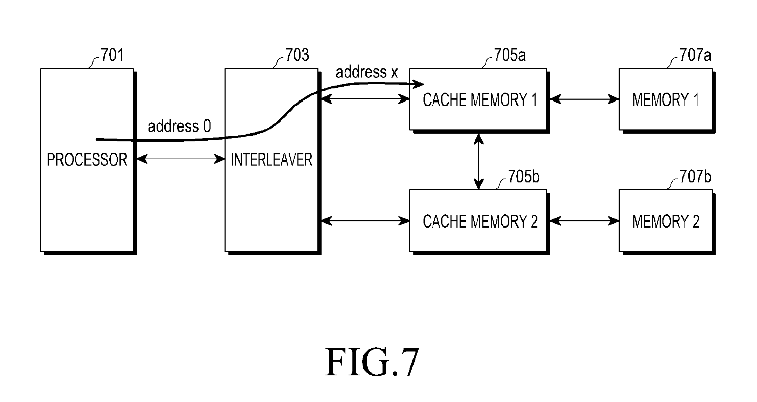

Detailed examples of accessing data stored in the memory 307 by the processor 301 through sharing of access-related information between the cache memories 305 according to an embodiment of the present invention will be described in detail below with reference to FIGS. 7 to 10.

FIGS. 4 to 6 are flowcharts illustrating a data access procedure in an electronic device according to various embodiments of the present invention. A device for performing the methods according to various embodiments of the present invention, which are shown in FIGS. 4 to 6, may be, for example, the electronic device shown in FIG. 3.

FIG. 4 is a flowchart illustrating a data access procedure in an electronic device according to an embodiment of the present invention.

Referring to FIG. 4, in operation 401, a cache memory (e.g., the first cache memory 305a) may receive a data request from a processor (e.g., the processor 301). For example, the data request may be received through an interleaver (e.g., the interleaver 303).

In operation 403, in accordance with an embodiment of the present invention, the data-requested cache memory (e.g., the first cache memory 305a) may transmit access-related information regarding the request to at least one other cache memory (e.g., the second cache memory 305b). The transmission of access-related information in operation 403 may be performed after operation 405, 407 or 409 according to various alternative embodiments of the present invention.

For example, the access-related information according to an embodiment of the present invention may include not only a value of the data that a processor requests from a memory by accessing the memory as described above, information about the logical or physical address in a memory in which the requested data is stored, block information of the data to be accessed, cache miss information, cache hit information, information about the number of occurrences of a cache miss, or information about the number of occurrences of a cache hit, but also any information (e.g., various traffic-related information of a bus line) related to data access.

For example, upon receiving a data request from the processor, the cache memory may transmit the data value or address information to at least one other cache memory. For example, if it is determined in operation 405 or 407 whether the requested data is present in the cache memory, the cache memory may transmit hit information, miss information, count information or the like to at least one other cache memory.

For example, if it is determined in operation 405 that the requested data is present in the data-requested cache memory (e.g., the first cache memory 305a) (e.g., if a cache hit occurs), the data-requested cache memory may read the requested data from the cache memory (e.g., the first cache memory 305a) and transmit the read data to the processor (or the interleaver) in operation 409.

For example, if it is determined in operation 405 that the requested data is not present in the data-requested cache memory (e.g., the first cache memory 305a) (e.g., if a cache miss occurs), the cache memory may determine that a cache miss has occurred.

In accordance with an embodiment of the present invention, the cache miss-occurred cache memory (e.g., the first cache memory 305a) may deliver access-related information (e.g., cache miss information, information about the number of occurrences of a cache miss, address information of the access-requested data, or the like) associated with the requested data to one or more other cache memories (e.g., the second cache memory 305b) in response to the occurrence of the cache miss.

In operation 407, the cache miss-occurred cache memory (e.g., the first cache memory 305a) may request the data from the memory (e.g., the second cache memory 305b) that is functionally connected to the cache memory. Upon receiving the requested data from the connected memory, the cache miss-occurred cache memory may transmit the data to the processor (or the interleaver). In addition, the cache miss-occurred cache memory may store the data received from the memory (e.g., the first memory 307a) in the cache memory.

Further, in accordance with an embodiment of the present invention, upon receiving access-related information from the cache miss-occurred cache memory (e.g., the first cache memory 305a), another cache memory (e.g., the second cache memory 305b) may request the data from the memory (e.g., the second memory 307b) that is functionally connected to another cache memory. Upon receiving the requested data, another cache memory (e.g., the second cache memory 305b) may store the data received from the memory (e.g., the second memory 307b). Accordingly, no cache miss may occur when a data request is received from the processor or the interleaver.

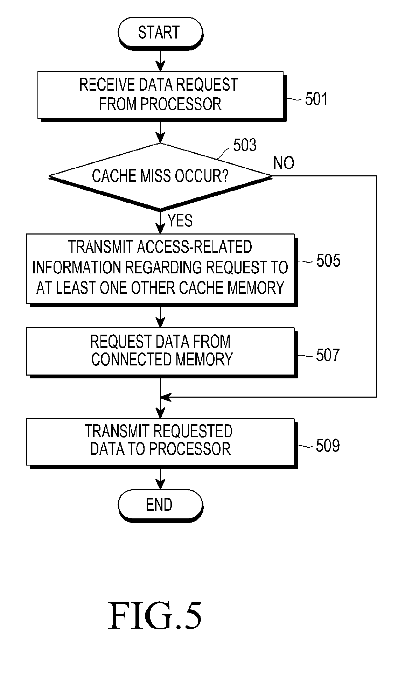

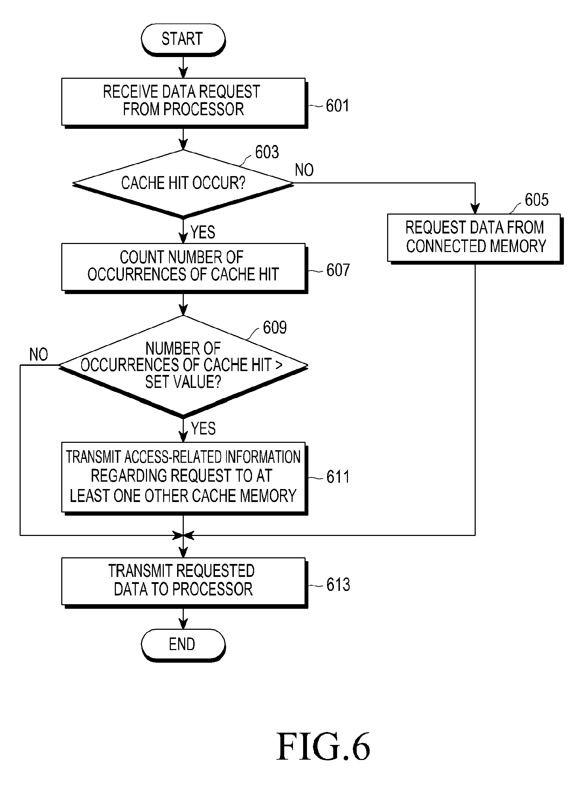

FIGS. 5 and 6 illustrate procedures for transmitting access-related information according to an embodiment of the present invention, if transmission conditions (e.g., a case where a cache miss occurs in a cache memory, or a case where a cache hit occurs in a cache memory) of access-related information are satisfied.

FIG. 5 is a flowchart illustrating a data access procedure during occurrence of a cache miss according to an embodiment of the present invention.

Referring to FIG. 5, in operation 501, a cache memory (e.g., the first cache memory 305a) may receive a data request from a processor (e.g., the processor 301). For example, the data request may be received through an interleaver (e.g., the interleaver 303).

For example, if it is determined in operation 503 that the requested data is present in the data-requested cache memory (e.g., the first cache memory 305a) (e.g., if a cache hit occurs), the cache memory (e.g., the first cache memory 305a) may read the requested data from the cache memory (e.g., the first cache memory 305a) and transmit the read data to the processor (or the interleaver) in operation 509.

For example, if it is determined in operation 503 that the requested data is not present in the data-requested cache memory (e.g., the first cache memory 305a) (e.g., if a cache miss occurs), the cache memory (e.g., the first cache memory 305a) may deliver access-related information (e.g., cache miss information, information about the number of occurrences of a cache miss, address information of the access-requested data, or the like) associated with the requested data to one or more other cache memories (e.g., the second cache memory 305b) in response to the occurrence of the cache miss in operation 505 according to an embodiment of the present invention.

In operation 507, the cache miss-occurred cache memory (e.g., the first cache memory 305a) may request the data from the memory (e.g., the second cache memory 305b) that is functionally connected to the cache memory. Upon receiving the requested data from the connected memory, the cache miss-occurred cache memory may transmit the requested data to the processor (or the interleaver) in operation 509. In addition, the cache miss-occurred cache memory may store the data received from the memory (e.g., the first memory 307a) in the cache memory.

Although it is assumed in FIG. 5 that a cache memory transmits access-related information (e.g., cache miss-related information) to another cache memory each time a cache miss occurs, the cache memory may count the number of occurrences of a cache miss, and transmit access-related information to another cache memory if the counted number is greater than or equal to a certain value.

As described above, in an embodiment of the present invention, the occurrence/non-occurrence of a cache miss or the number of occurrences of a cache miss may be set as transmission conditions of access-related information. If a cache memory transmits access-related information to another cache memory depending on the cache miss occurrence conditions in this way, the cache miss which may occur in the cache memory may be reduced.

FIG. 6 is a flowchart illustrating a data access procedure during occurrence of a cache hit according to an embodiment of the present invention.

Referring to FIG. 6, in operation 601, a cache memory (e.g., the first cache memory 305a) may receive a data request from a processor (e.g., the processor 301). For example, the data request may be received through an interleaver (e.g., the interleaver 303).

For example, if it is determined in operation 603 that the requested data is not present in the data-requested cache memory (e.g., the first cache memory 305a) (e.g., if a cache miss occurs), the cache miss-occurred cache memory (e.g., the first cache memory 305a) may request the data from the memory (e.g., the second cache memory 305b) that is functionally connected to the cache memory, in operation 605. Upon receiving the requested data from the connected memory, the cache miss-occurred cache memory may transmit the data to the processor (or the interleaver) in operation 613. In addition, the cache miss-occurred cache memory may store the data received from the memory (e.g., the first memory 307a) in the cache memory.

For example, if it is determined in operation 603 that the requested data is present in the data-requested cache memory (e.g., the first cache memory 305a) (e.g., if a cache hit occurs), the data-requested cache memory (e.g., the first cache memory 305a) may count the number of occurrences of a cache hit in operation 607. The counting of the number of occurrences of a cache hit may be performed for a certain time, and may be reset after transmission of access-related information in operation 611.

If it is determined in operation 609 that the number of occurrences of a cache hit is greater than or equal to a certain value, the cache memory may transmit access-related information (e.g., cache hit information, information about the number of occurrences of a cache hit, address information of the access-requested data, and the like) associated with the requested data to one or more other cache memories (e.g., the second cache memory 305b) in response to the occurrence of the cache hit in operation 611 according to an embodiment of the present invention. In operation 613, the cache memory may transmit the requested data to the processor (or the interleaver).

Although it is assumed in FIG. 6 that a cache memory transmits access-related information to another cache memory if the number of occurrences of a cache hit, which is counted by the cache memory, is greater than or equal to a certain value, the cache memory may transmit access-related information (e.g., cache hit-related information) to another cache memory each time a cache hit occurs, regardless of the number of occurrences of a cache hit.

As described above, in an embodiment of the present invention, the occurrence/non-occurrence of a cache hit or the number of occurrences of a cache hit may be set as transmission conditions of access-related information. If a cache memory transmits access-related information to another cache memory depending on the cache hit occurrence conditions in this way, it is possible to use the cache memory as a pre-fetch buffer.

A method for accessing data in an electronic device according to an embodiment of the present invention may include receiving a request for data from a processor by a first cache memory among a plurality of cache memories; transmitting the requested data to the processor; and transmitting access-related information regarding the request to a second cache memory among the plurality of cache memories.

The transmitting of the access-related information may include determining whether the data requested by the processor is present in the first cache memory; and transmitting the access-related information to the second cache memory, if the requested data is present in the first cache memory.

The transmitting of the access-related information may include counting the number of occurrences of a cache hit, if the requested data is present in the first cache memory; and transmitting the access-related information to the second cache memory, if the number of occurrences of a cache hit is greater than or equal to a certain number.

The access-related information may include cache hit-related information for the first cache memory. The cache hit-related information may include at least one selected from information about occurrence/non-occurrence of a cache hit, address information of data for which a cache hit has occurred, next address information of data for which a cache hit has occurred, and information about the number of occurrences of a cache hit.

The transmitting of the access-related information may include determining whether the data requested by the processor is present in the first cache memory; and transmitting the access-related information to the second cache memory, if the requested data is not present in the first cache memory.

The transmitting of the access-related information may include counting the number of occurrences of a cache miss, if the requested data is not present in the first cache memory; and transmitting the access-related information to the second cache memory, if the number of occurrences of a cache miss is greater than or equal to a certain number.

The access-related information may include cache miss-related information for the first cache memory. The cache miss-related information may include at least one selected from information about occurrence/non-occurrence of a cache miss, address information of data for which a cache miss has occurred, next address information of data for which a cache miss has occurred, and information about the number of occurrences of a cache miss.

A method for accessing data in an electronic device according to an embodiment of the present invention may include receiving a request for data from a processor by a first cache memory among a plurality of cache memories; determining whether the data requested by the processor is present in the first cache memory; and transmitting access-related information regarding the request to a second cache memory among the plurality of cache memories, if the requested data is present in the first cache memory.

A method for accessing data in an electronic device according to an embodiment of the present invention may include receiving a request for data from a processor by a first cache memory among a plurality of cache memories; determining whether the data requested by the processor is present in the first cache memory; and transmitting access-related information regarding the request to a second cache memory among the plurality of cache memories, if the requested data is not present in the first cache memory.

In accordance with an embodiment of the present invention, as described above, a specific cache memory may determine whether a cache hit or a cache miss has occurred, and transmit access-related information (e.g., information related to a cache miss) to another cache memory depending on the importance of the requested data, if the cache miss has occurred. Alternatively, if the cache miss occurs, the cache memory may determine whether to deliver access-related information to another cache memory, depending on the importance of the requested data. Further, in accordance with an embodiment of the present invention, the transmission of access-related information to another cache memory may be performed in a broadcasting way to at least one other cache memory, without a separate connection operation with, for example, an individual cache memory.

As for another cache memory that has received the transmitted cache miss information, if a cache miss has occurred even in the cache memory itself, the cache memory may allocate data from a memory in advance before a data request from the processor. Accordingly, it is possible to prepare for a data request from the processor and to prevent occurrence of a cache miss in advance.

The operations described in the processes or methods shown in FIGS. 4 to 6 may be performed in a sequential, parallel, iterative or heuristic manner. Alternatively, the operations may be performed in a different order, some operations may be omitted, or other operations may be added.

FIGS. 7 to 10 illustrate examples in which data access is handled in each component of an electronic device according to an embodiment of the present invention.

Referring to FIG. 7, for example a processor 701 (e.g., the processor 301) may request data of a specific block size, whose address starts at 'address 0', through an interleaver 703. The address may be converted into another address (e.g., 'address x') by the interleaver 703.

Accordingly, for example, the interleaver 703 may request the data from a first cache memory 705a. In response to the data request from the processor 701, the first cache memory 705a may determine whether the requested data is present in the first cache memory 705a. For example, if the requested data is not present in the first cache memory 705a, a cache miss may occur in the first cache memory 705a.

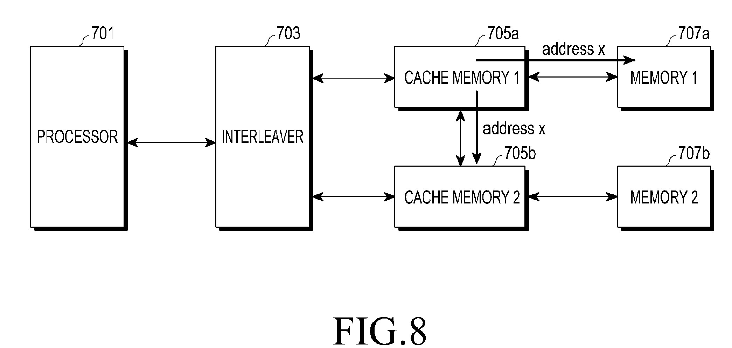

Referring to FIG. 8, if a cache miss occurs in the first cache memory 705a in response to the data request as in FIG. 7, the first cache memory 705a may deliver access-related information (e.g., an address of the requested data for which the cache miss has occurred) to a first memory 707a according to an embodiment of the present invention. In accordance with an embodiment of the present invention, the first cache memory 705a may deliver access-related information (e.g., information related to the cache miss (e.g., address information of data for which a cache miss has occurred)) to a second cache memory 705b through a path (e.g., a bus) formed between the first cache memory 705a and the second cache memory 705b.

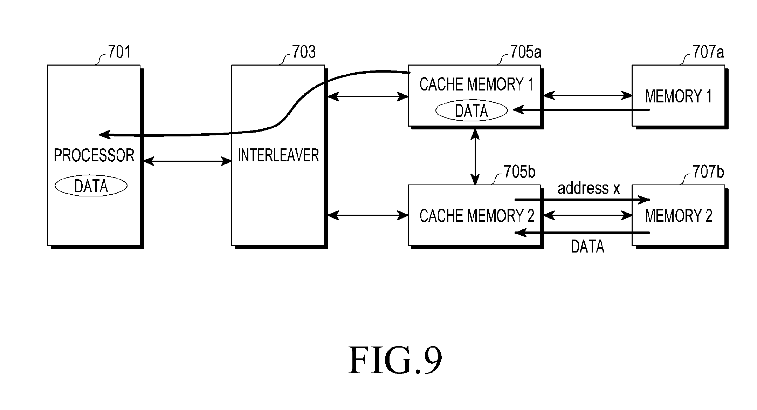

Referring to FIG. 9, the first cache memory 705a may read the data requested by the processor 701 from the first memory 707a, and fill a cache line with the read data. If the requested data is read, the first cache memory 705a may transmit the data to the processor 701. The processor 701 may process the data provided from the first cache memory 705a.

In accordance with an embodiment of the present invention, the second cache memory 705b may request data from a second memory 707b using the access-related information (e.g., address information of the requested data) provided from the first cache memory 705a. For example, the second cache memory 705b may request the data corresponding to the provided address information, and may request the data (e.g., data of the next address or the next block, and the like) related to the data corresponding to the address information. The second cache memory 705b may read the requested data from the second memory 707b, and fill a cache line with the read data.

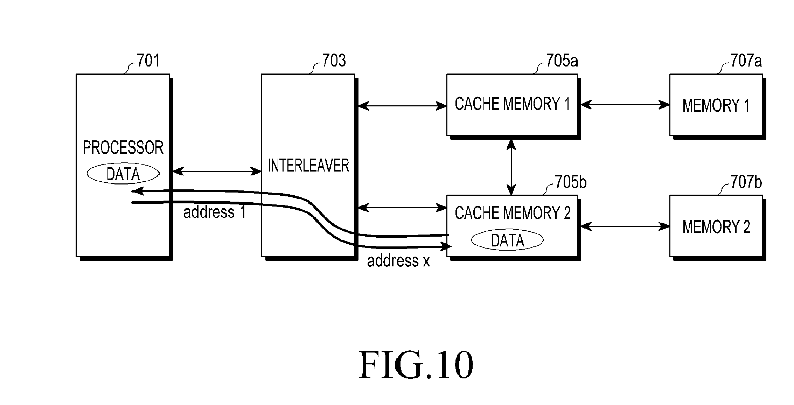

Referring to FIG. 10, the processor 701 may request data for the next address (e.g., 'address 1') of the address of 'address 0' for the processed data, for processing. The request may be sent to the second cache memory 705b through the interleaver 703. The 'address 1' may be converted into 'address x', and then delivered to the second cache memory 705b.

Since the second cache memory 705b has filled the cache line in advance with data to be requested next as described in FIG. 9 depending on the information (e.g., access-related information) provided from the first cache memory 705a, a cache hit may occur for the data request from the processor 701. Therefore, a cache hit may occur in the second cache memory 705b for the stored data, and the second cache memory 705b may provide the data to the processor 701.

In accordance with another embodiment of the present invention, the second cache memory 705b may provide cache hit information of the second cache memory 705b back to the first cache memory 705a or any other cache memory, thereby allowing the first cache memory 705a to prepare in advance the data corresponding to the next address of the address 'address x'. Therefore, in accordance with an embodiment of the present invention, the processor 701 may receive data from the second cache memory 705b and perform the next processing without the latency that occurs during a cache miss as described above.

In accordance with an embodiment of the present invention, the line size of the cache memory is adjustable. For example, whether or how many times a cache memory will deliver information related to the cache hit or cache miss to another cache memory may be adjusted depending on the characteristics of the processor. Accordingly, it is possible to optimize the data transmission by providing a different cache line size depending on the characteristics of the processor.

For example, when desiring to operate in a cache line size that is twice a given cache line size, a cache memory may deliver an address of data for which a cache miss has occurred, to the other cache memory, and another cache memory that has received the cache miss-related information may fill the cache memory with the data related to the address.

In accordance with an embodiment of the present invention, the cache memory may be used as a pre-fetch buffer as described above. For example, by delivering the current access-related information (e.g., cache hit information) of the processor to another cache memory by a cache memory, it is possible to enable another cache memory to pre-fetch the data to be requested next. Thus, the processor may be enabled to operate as if it accesses only the cache memory without accessing the memory (e.g., the main memory).

For example, the processor may deliver, to another cache memory, address information of the data that the currently accessed cache memory desires to access. Another cache memory that has received the address information may load the data, and if the processor accesses the data, the processor may deliver the access information to another cache memory. By repeating this, it is possible to load data at the processing speed of the processor.

FIGS. 11 to 13 illustrate examples in which an electronic device is implemented in a variety types according to an embodiment of the present invention.

FIG. 11 is a block diagram illustrating an electronic device according to an embodiment of the present invention.

In above-described various embodiments of the present invention, for convenience of description, it has been assumed that one interleaver is connected to two cache memories to perform interleaving, and information is shared between two cache memories. However, as shown in FIG. 11, information sharing between three or more cache memories is also possible.

Referring to FIG. 11, if one interleaver 1103 is connected to N cache memories 1105-1 to 1105-N and the cache memories 1105-1 to 1105-N are connected to memories (e.g., main memories) 1107-1 to 1107-N, respectively, then information (e.g., access-related information) may be shared among the N cache memories 1105-1 to 1105-N.

Therefore, if a processor 1101 makes a data request, the data request may be sent to, for example, the first cache memory 1105-1 through the interleaver 1103. The first cache memory 1105-1 may determine whether data is present in the first cache memory 1105-1 in response to the data request, and provide the data to the processor 1101 through the first cache memory 1105-1 or the first memory 1107-1.

The access-related information in the first cache memory 1105-1 may be transmitted to another cache memory (e.g., at least one of the second cache memory 1105-2 to the N-th cache memory 1105-N).

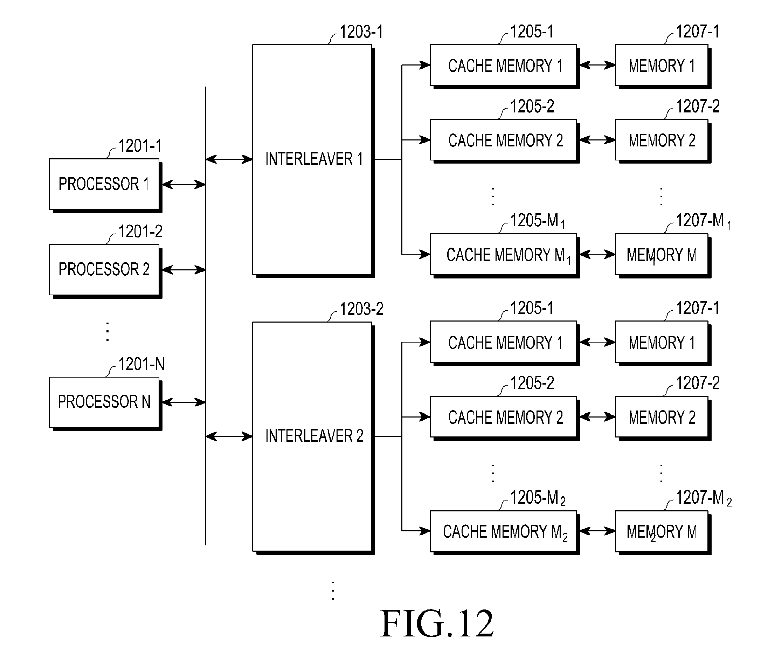

FIG. 12 is a block diagram illustrating an electronic device according to another embodiment of the present invention.

Referring to FIG. 12, in accordance with another embodiment of the present invention, a plurality of processors 1201 (1201-1 to 1201-N) may be connected to a plurality of cache memories 1205 (1205-1 to 1205-M₁ and 1205-1 to 1205-M₂) through a plurality of interleavers 1203 (1203-1 and 1203-2).

For example, the plurality of processors 1201 may request data from each of the cache memories 1205 or the memories 1207 through the plurality of interleavers 1203-1 and 1203-2. Each of the interleavers 1203-1 and 1203-2 may be connected to the plurality of cache memories 1205-1 to 1205-M to interleave a data request. For example, the first interleaver 1203-1 may be connected to M₁ cache memories 1205-1 to 1205-M₁, and the second interleave 1203-2 maybe connected to M₂ cache memories 1205-1 to 1205-M₂.

The M₁ cache memories 1205-1 to 1205-M₁ connected to the first interleaver 1203-1 may be connected to memories 1207-1 to 1207-M₁, respectively.

The cache memories 1205 may share information with each other according to various embodiments of the present invention. For example, the M₁ cache memories 1205-1 to 1205-M₁ connected to the first interleaver 1203-1 may share information with each other, and the M₂ cache memories 1205-1 to 1205-M₂ connected to the second interleaver 1203-2 may also share information with each other.

In another embodiment, the M₁ cache memories 1205-1 to 1205-M₁ connected to the first interleaver 1203-1 may share information with the M₂ cache memories 1205-1 to 1205-M₂ connected to the second interleaver 1203-2.

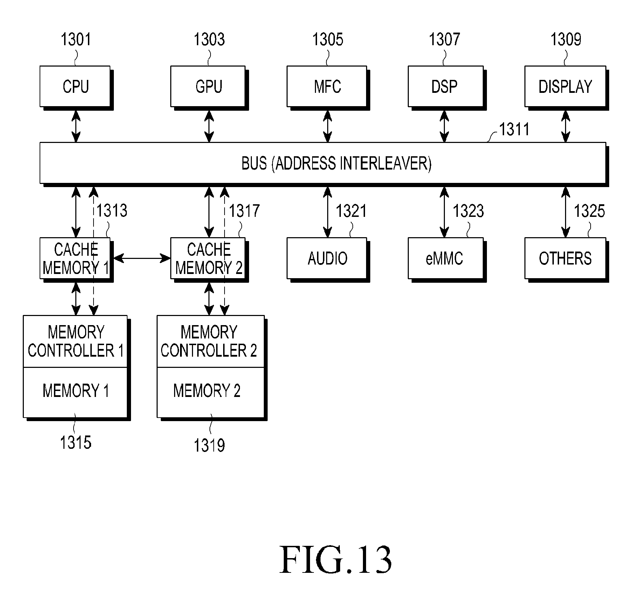

FIG. 13 is a block diagram illustrating an electronic device according to further another embodiment of the present invention.

Referring to FIG. 13, processors that may be provided in the electronic device may include various processors such as a CPU 1301, a GPU 1303, an MFC 1305, a DSP 1307, or others 1325. The processors may use the data that is stored in a memory, in a way of being incorporated into such modules as a display 1309, an audio module 1321 or an eMMC 1323.

Each of the processors 1301, 1303, 1305, 1307, 1309, 1321, 1323, 1325 or the like may send a request for data to be processed to a first cache memory 1313 or a second cache memory 1317 through a bus 1311 such as an address interleaver according to an embodiment of the present invention.

In accordance with an embodiment of the present invention, the first cache memory 1313 or the second cache memory 1317 may request data from a first memory 1315 or a second memory 1319, respectively. As for the first cache memory 1313 or the second cache memory 1317, the first memory 1315 or the second memory 1319 that has received the data request may provide the data to its associated cache memory 1313 or 1317 by a first memory controller or a second memory controller, respectively.

The first cache memory 1313 and the second cache memory 1317 may share information with each other according to an embodiment of the present invention. For example, a direct path capable of communication between cache memory controllers provided in their cache memories may be formed, and information (e.g., access-related information (e.g., cache miss-related information, cache hit-related information, address information of the requested data, address information of the next data of the requested data, traffic information, and the like)) may be shared through the formed path.

Through the information sharing between cache memories, it is possible to reduce the latency between the processors and the cache memories, and the latency between the cache memories and the main memories.

An electronic device for accessing data according to an embodiment of the present invention may include at least one processor; a plurality of cache memories configured to transmit data requested by the processor to the processor; and a plurality of memories, each of which is connected to an associated one of the cache memories to transmit the requested data through the cache memory. At least one of the plurality of cache memories may share access-related information with other cache memories.

At least two of the plurality of cache memories may share the access-related information with each other through a bus line.

A first cache memory among the plurality of cache memories may transmit the access-related information to a second cache memory, if the data requested by the processor is present in the first cache memory. The first cache memory may count the number of occurrences of a cache hit if the requested data is present in the first cache memory, and transmit the access-related information to the second cache memory if the number of occurrences of a cache hit is greater than or equal to a certain number.

The access-related information may include cache hit-related information for the at least one cache memory. The cache hit-related information may include at least one selected from information about occurrence/non-occurrence of a cache hit, address information of data for which a cache hit has occurred, next address information of data for which a cache hit has occurred, and information about the number of occurrences of a cache hit.

The first cache memory among the plurality of cache memories may transmit the access-related information to a second cache memory, if the data requested by the processor is not present in the first cache memory. The first cache memory may count the number of occurrences of a cache miss if the requested data is not present in the first cache memory, and transmit the access-related information to the second cache memory if the number of occurrences of a cache miss is greater than or equal to a certain number.

The access-related information may include cache miss-related information for the first cache memory. The cache miss-related information may include at least one selected from information about occurrence/non-occurrence of a cache miss, address information of data for which a cache miss has occurred, next address information of data for which a cache miss has occurred, and information about the number of occurrences of a cache miss.

An electronic device for accessing data according to another embodiment of the present invention may include a processor; a first cache memory configured to transmit first data requested by the processor to the processor; and a second cache memory configured to transmit second data requested by the processor to the processor. The first cache memory and the second cache memory may be functionally connected by a bus line to share data with each other.

Through an example of actually accessing data stored in a memory by a processor, a description will be made of an embodiment in which the latency is reduced according to an embodiment of the present invention.

An embodiment described below shows the performance improvement which may occur when embodiments of the present invention are applied to a layer 3 (L3) cache memory.

A line size of the L3 cache memory may be greater than or equal to a line size of a layer 2 (L2) cache memory. In addition, a one-time data request size of each processor (e.g., a CPU, a GPU, a codec, and the like) may be less than or equal to the line size of the L3 cache memory.

Assuming that a cache hit rate of an L3 cache memory is 40% (the hit rate of the L3 cache memory may be relatively low), if a cache hit occurs in the L3 cache memory in response to a data request from a processor, the latency may be assumed to be 40 cycles. In addition, the latency, which occurs as the L3 cache memory requests data from the main memory due to a cache miss in the L3 cache memory, may be assumed to be 40 cycles.

If approximately 75% of the data request from the processor has the locality and a cache memory is allowed to operate as if a cache hit occurs, by loading data from the memory in advance through applying of information sharing between cache memories according to an embodiment of the present invention, the following performance difference may occur.

If an embodiment of the present invention is not applied, the average latency maybe 0.4×40 + 0.6×80 = 64 (cycles).

However, if an embodiment of the present invention is applied, the average latency maybe 0.4×40 + 0.6×40×0.75 + 0.6×80×0.25 = 46 (cycles).

Therefore, if an embodiment of the present invention is applied to the processor, it is possible to obtain a gain of 18 cycles on average. Accordingly, 28% of the bus latency may be reduced.

In addition, L3 should be set to be greater than or equal to L2 in terms of the cache line size during system configuration, to make it possible to quickly respond by handling a cache miss of L2 as one data request. In contrast, however, if L3 is set to be less than L2, multiple data requests should be sent for one cache miss, causing a decrease in the efficiency. For the same reason, the cache line size may not be set to be less than the data request size of the processor.

As is apparent from the foregoing description, according to an embodiment of the present invention, a plurality of cache memories may share access-related information with each other, thereby reducing the latency of the memory access time and improving the data processing speed of the processor.

According to an embodiment of the present invention, in a data access method using memory interleaving, a plurality of cache memories may share access-related information with each other, thereby reducing the cache miss that occurs in a cache memory. In addition, a cache miss in a cache memory may be predicted, making it possible to hide the miss penalty during data access.

According to an embodiment of the present invention, cache memories may share access-related information with each other, so that the cache memories may be used like cache lines of a size greater than the size given for the cache memories.

According to an embodiment of the present invention, a cache memory may deliver access-related information to another cache memory to share the access-related information, thereby allowing a cache memory to play a role similar to a pre-fetch buffer in the processor such as an image processor.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

While the present invention has been shown and described with reference to various embodiments thereof, it will be understood by those skilled in the art that various changes in form and details may be made therein without departing from the scope of the present invention as defined by the appended claims.

## Claims

1. A method for accessing data in an electronic device, the method comprising:
receiving a request for the data from at least one processor by a first cache memory among a plurality of cache memories;
transmitting the requested data to the at least one processor; and
transmitting access-related information regarding the request to a second cache memory among the plurality of cache memories.

2. The method of claim 1, wherein transmitting access-related information comprises:
determining whether the data requested by the at least one processor is present in the first cache memory; and
transmitting the access-related information to the second cache memory, if the requested data is present in the first cache memory.

3. The method of claim 2, wherein transmitting access-related information comprises:
counting a number of occurrences of a cache hit, if the requested data is present in the first cache memory; and
transmitting the access-related information to the second cache memory, only if the number of occurrences of the cache hit is greater than or equal to a certain number.

4. The method of any one of the preceding claims, wherein the access-related information includes cache hit-related information for the first cache memory.

5. The method of claim 4, wherein the cache hit-related information includes at least one selected from information about occurrence or non-occurrence of a cache hit, address information of data for which the cache hit has occurred, next address information of data for which the cache hit has occurred, and information about the number of occurrences of the cache hit.

6. The method of any one of the preceding claims, wherein transmitting access-related information comprises:
determining whether the data requested by the at least one processor is present in the first cache memory; and
transmitting the access-related information to the second cache memory, if the requested data is not present in the first cache memory.

7. The method of claim 6, wherein transmitting access-related information comprises:
counting a number of occurrences of a cache miss, if the requested data is not present in the first cache memory; and
transmitting the access-related information to the second cache memory, only if the number of occurrences of a cache miss is greater than or equal to a certain number.

8. An electronic device for accessing data, the electronic device comprising:
at least one processor;
a plurality of cache memories configured to transmit the data requested by the at least one processor to the at least one processor; and
a plurality of memories, each of which is connected to an associated one of the cache memories and configured to transmit the requested data through the associated one of the cache memories;
wherein at least one of the plurality of cache memories is configured to share access-related information regarding data requested by a processor with other cache memories.

9. The electronic device of claim 8, wherein at least two of the plurality of cache memories are further configured to share access-related information with each other through a bus line.

10. The electronic device of claim 8 or claim 9, wherein a first cache memory among the plurality of cache memories is further configured to transmit the access-related information to a second cache memory, if the data requested by the at least one processor is present in the first cache memory.

11. The electronic device of claim 10, wherein the first cache memory is further configured:
to count the number of occurrences of a cache hit if the requested data is present in the first cache memory, and
to transmit the access-related information to the second cache memory only if the number of occurrences of a cache hit is greater than or equal to a certain number.

12. The electronic device of any one of claims 8 to 11, wherein the access-related information includes cache hit-related information for the at least one cache memory.

13. The electronic device of claim 12, wherein the cache hit-related information includes at least one selected from information about occurrence or non-occurrence of a cache hit, address information of data for which the cache hit has occurred, next address information of data for which the cache hit has occurred, and information about a number of occurrences of the cache hit.

14. The electronic device of any one of claims 8 to 13, wherein a first cache memory among the plurality of cache memories is further configured to transmit the access-related information to a second cache memory, if the data requested by the at least one processor is not present in the first cache memory.
